# EUROPÄISCHE PATENTSCHRIFT

(11) **EP 1 685 075 B1**
(45) Veröffentlichungstag und Bekanntmachung des Hinweises auf die Patenterteilung: **26.04.2017**
(21) Anmeldenummer: 04818120.0
(22) Anmeldetag: 03.11.2004
(51) Int. Cl.: C03C 17/42, C04B 41/89, C23C 28/00, C23C 16/453, C23C 16/40, C03C 17/245

(54) **GEGENSTAND MIT LEICHT REINIGBARER OBERFLÄCHE UND VERFAHREN ZU SEINER HERSTELLUNG**
OBJECT WITH EASILY CLEANED SURFACES AND METHOD FOR PRODUCTION THEREOF
OBJET DOTE D'UNE SURFACE FACILE A NETTOYER ET PROCEDE DE FABRICATION DUDIT OBJET

(30) Priorität: 04.11.2003 DE 10351467
(43) Veröffentlichungstag der Anmeldung: 02.08.2006
(73) Patentinhaber: Schott AG, 55122 Mainz (DE)
(72) Erfinder: HENZE, Inka, 55268 Nieder-Olm (DE); SCHULTHEIS, Bernd, 55270 Schwabenheim (DE); GUDGEL, Todd J. Dr., 55270 Jugenheim (DE); WEBER, Gerhard, 55234 Bechenheim (DE); MITTERHUBER, Monica Dr., 94469 Deggendorf (DE)
(74) Vertreter: Blumbach Zinngrebe
(86) Internationale Anmeldenummer: PCT/EP2004/012428
(87) Internationale Veröffentlichungsnummer: WO 2005/044749

(56) Entgegenhaltungen:
- EP-A- 0 594 171
- EP-A- 0 891 953
- EP-A- 1 095 923
- EP-A- 1 142 845
- DD-A5- 282 179
- DE-A1- 10 310 827

## Beschreibung

Die Erfindung bezieht sich auf einen Gegenstand mit leicht reinigbarer Oberfläche durch eine Doppelbeschichtung mit einer eine hydrophobe Komponente aufweisenden äußeren Schicht und einer inneren metalloxidhaltigen Schicht. Solche Gegenstände können aus keramischem Material bestehen, wie beispielsweise Fliesen, sanitärkeramische Produkte oder können Emails, wie z.B. Backofenmuffeln, Metalle, wie z.B. Edelstahl oder Kunststoffe sein. Eine bevorzugte Anwendung stellen Gegenstände aus Glas oder Glaskeramik dar, wie beispielsweise Backofen-Innenscheiben oder transparente Kamintüren, die jeweils hohen Temperaturen und/oder starken Verschmutzungen ausgesetzt sind und fortwährend gereinigt werden müssen, damit sie ihre Funktion voll erfüllen können.

Die Erfindung bezieht sich ferner auf ein Verfahren zur Herstellung solcher beschichteten Gegenstände.

Es gibt eine Reihe von privat oder gewerblich benutzten Gegenständen, die starken Verschmutzungen ausgesetzt sind, d.h. bei denen es auf eine leichte Reinigbarkeit ankommt.

Gemäß dem Stand der Technik werden Gegenstände, die Verschmutzungen ausgesetzt sind, typischerweise entweder mit hydrophoben Lösungen behandelt oder mit hydrophilen, photokatalytischen Schichten versehen.

Hydrophobe Oberflächen können auf unterschiedliche Weise erzeugt werden. Zum einen kann, wie in der Keramikindustrie, eine aus einem anorg.-org.-Nanopartikelnetzwerk bestehende Schicht über ungesättigte organische Gruppen thermisch oder mit UV-Licht vernetzt werden. Typisches Beispiel sind die anorganisch-organischen Hybridpolymere, die unter der Marke ORMOCER^{®} des Fraunhofer Instituts für Silicatforschung bekannt sind. Zum anderen gibt es eine Vielzahl von hydrophoben, organischen Lösungen, die nach der Fertigung oder auch vom Endkunden appliziert werden können (z.B. Lösungen, die unter der Marke "Clear Shield^{®}" bekannt geworden sind). Die WO 00/37 374 zeigt ein Beispiel für diesen Lösungsansatz. Diese Ansätze sind mechanisch nicht sehr beständig und sind auch durch die organischen Komponenten in der max. Einsatztemperatur begrenzt. Weiterhin ist aus der DE 103 10 827 A1 bekannt, eine solche Lösung als Hydrophobierungsschicht auf eine durch Flammenbeschichtung hergestellte SiOₓ-Schicht aufzutragen.

Hydrophile, photokatalytische Schichten werden z.B. von Pilkington ("Aktiv Glas^{®}") als leicht reinigbare Fassadengläser angeboten. Um eine Reinigungswirkung zu erzielen, ist dabei eine Aktivierung durch UV-Licht zwingend nötig. Außerdem ist die Abbaurate sehr niedrig und nicht für Kontaktverschmutzungen geeignet.

An vorstehende Gegenstände mit leicht reinigbaren Oberflächen werden in der Praxis anwendungsspezifische Anforderungen gestellt, die zum Teil sehr hart sind. Beispielsweise werden an die Schichten von Backofen-Innenscheiben folgende Anforderungen gestellt.
- Temperaturbeständigkeit von 300° C/100 h
- leichte Reinigung bei diversen Direktverschmutzungen (z.B. Käse, Ketchup, Quark, Lebensmittelmischungen, Schweinebauch, Pflaumenmus) bei hohen Temperaturen (bis 300° C)
- mechanische Beständigkeit (Radiertest, Schrubbtest mit gängigen Reinigungstüchern oder Schwämmen, wie z.B. mit einem Mikrofasertuch)
- chemische Beständigkeit gegen diverse Reinigungsmittel, wie z.B. Backofenspray, Spülmittel, Essigreiniger, und Lebensmittel.

Es sind keine Gegenstände mit leicht reinigbaren Oberflächen bekannt, die allen vorgenannten Anforderungen genügen. Dies gilt auch für die Gegenstände und die zugehörigen Herstellungs-Verfahren nach der EP 0 891 953 A1 und der DE 100 18 671 A1, deren Oberfläche jeweils eine Doppelbeschichtung trägt.

Die DE 100 18 671 A1 offenbart einen Gegenstand aus insbesondere Glas oder keramischem Material, mit einer dünnen Unterschicht aus einer Metallverbindung, insbesondere aus anorganischen oder organischen Verbindungen mit vorzugsweise 3- oder 4-wertigen Metallen wie Si, Al, Ti, Zr, die als Dispersion durch Spritzen oder Tauchen oder durch Pulverbestäuben, aber auch durch entsprechende Sole oder Gele auf die Oberfläche des Gegenstandes aufgetragen und bei sehr hohen Temperaturen unter Zersetzung der organischen Anteile ausgebrannt werden. Auf diese Unterschicht wird nach ihrer Abkühlung eine äußere hydrophobe organische Schicht aus Siloxane, Silane, Fluorsilanpolyurethane oder Tetrafluorpolyethylene mit bekannten Methoden aufgetragen und angetrocknet.

Die EP-Schrift beschreibt einen Gegenstand aus Glas mit einer ersten, unteren Schicht aus Kieselerde (Silica) und einer zweiten, äußeren, silanhaltigen hydrophoben Schicht. Auch bei diesem Gegenstand wird die Kieselschicht ausgebrannt, bevor die hydrophobe Schicht appliziert wird. Nach einschlägigen Erfahrungen sind diese bekannten DoppelSchichten im Reinigungsprozeß nicht ausreichend beständig. Durch die hohen Ausbrenntemperaturen, die zu einer glasigen Unterschicht führen, reagieren die reaktiven Gruppen in der Unterschicht weitestgehend ab, so dass die chemischen Bindungen mit Partnern in der äußeren hydrophoben Schicht äußerst klein sind.

Der Erfindung liegt die Aufgabe zugrunde, den eingangs bezeichneten Gegenstand mit einer Beschichtung zu versehen, die die vorstehend aufgeführten, für Backofen-Innenscheiben notwendigen Tests besteht.

Die erfindungsgemäße Lösung, ein Substrat mit einem Schichtsystem mit zumindest zwei Schichten zu versehen, um einen Gegenstand mit leicht reinigbarer Oberfläche zu erhalten, sieht vor, auf einem Substrat des Gegenstands eine metalloxidhaltige Schicht, vorzugweise eine siliziumhaltige Schicht flammpyrolytisch abzuscheiden und auf der flammpyrolytisch abgeschiedenen Schicht eine Schicht mit zumindest einer hydrophoben Komponente aufzubringen. Die flammpyrolytisch abgeschiedene vorzugsweise siliziumhaltige Schicht hat dabei insbesondere, ähnlich wie die innere Sol-Gel-Schicht der oben beschriebenen Ausführungsformen der Erfindung die Aufgabe, die Haftung und/oder chemische Anbindung der hydrophoben Schicht zu verbessern. In beiden Fällen wird eine erstaunlich gute Haftung der hydrophoben Schicht und damit auch eine hohe Widerstandsfähigkeit gegenüber mechanischen Belastungen, wie sie etwa beim Reinigen der Oberfläche auftreten, erreicht. So hat sich überraschenderweise gezeigt, dass der Kontaktwinkel von Wasser auf der mit der hydrophoben Schicht oder Schicht mit zumindest einer hydrophoben Komponente versehenen

Oberfläche des Substrats auch nach 10⁴ Schrubb-Hüben noch mehr als 90° beträgt, wobei bei einem Schrubb-Hub eine wassergetränkte Filzauflage mit einer Gewichtsbelastung von einem Kilogramm über die Oberfläche bewegt wird.

Ein Vorzug der flammpyrolytischen Beschichtung ist auch noch, dass diese Beschichtung besonders schnell und ohne Trocken- oder Aushärtezeiten aufgebracht werden kann, was sich wiederum günstig auf die Produktionskosten und Prozesszeiten auswirken kann.

Eine gute Haftung und/oder chemische Anbindung weiterer Schichten auf der flammpyrolytisch aufgebrachten Metalloxid-Schicht, vorzugsweise siliziumhaltigen Schicht kann insbesondere dann erreicht werden, wenn aufgrund der Abscheidung die Schicht zur Oberfläche weisende OH-Gruppen enthält, an welchen insbesondere Moleküle der Schicht mit der hydrophoben Komponente ankoppeln können.
Die Haftung kann insbesondere auch erhöht werden, indem eine flammpyrolytische Schicht abgeschieden wird, die eine poröse, vorzugsweise nanoporöse Oberflächenstruktur aufweist. Auf diese Weise wird die aktive Oberfläche und damit die Anzahl an OH-Gruppen vergrößert.

Insbesondere ist gemäß einer bevorzugten Ausführungsform der Erfindung vorgesehen, dass eine siliziumhaltige Schicht flammpyrolytisch abgeschieden wird, die Silikat, beziehungsweise Siliziumoxid enthält. Derartige Schichten können besonders einfach durch Verbrennung eines siliziumhaltigen Gases in Luft mit Sauerstoff als Oxidationsmittel hergestellt werden.

Als Substrat kann unter anderem ein Kalk-Natron-Glas oder ein Borosilikatglas verwendet werden. Eine Ausführungsform der Erfindung sieht weiterhin vor, ein Floatglas-Substrat zu beschichten. Ebenso sind andere Gläser und Glaskeramiken als Substrate möglich, die nicht im Floatprozess hergestellt werden, wie z.B. DURAN®, CERAN® oder ROBAX®. Denkbar sind weiterhin Substratmaterialien, wie Keramiken, Kunststoffe, Metalle, Email, sogar lackierte Oberflächen oder Holz. Bevorzugt ist vorgesehen, bereits vereinzelte Substrate zu beschichten, die durch Abtrennen von Abschnitten von einem Floatglas hergestellt wurden. Die nachträgliche Beschichtung bereits vereinzelter Substrate ist unter anderem günstig, wenn die Beschichtung mit der hydrophoben Schicht von der Floatglas-Herstellung getrennt bleiben soll. Auch können auf diese Weise Zwischenbearbeitungsschritte vor der flammpyrolytischen Beschichtung durchgeführt werden. Damit kann beispielsweise verhindert werden, dass die Beschichtung bei der Weiterverarbeitung, beispielsweise beim Abtrennen der Floatglas-Abschnitte, Dekorieren und/oder thermischen Vorspannen beschädigt wird.

Die Oberfläche eines Erzeugnisses kann auch bereits durch die flammpyrolytische Schicht selbst vorteilhaft verändert werden. Eine flammpyrolytische metalloxid-, vorzugsweise siliziumhaltige Schicht kann beispielsweise für eine Hydrophilierung der Oberfläche dienen und dabei bei Beschlag des Erzeugnisses verhindern, dass sich Tröpfchen bilden. Auch kann eine solche Schicht allgemein als Grundlage zur Verbesserung der Haftung weiterer Schichten und/oder als Barriere dienen. Die Erfindung sieht daher auch ein Verfahren zur Herstellung eines Substrates mit hydrophiler Oberfläche vor, bei welchem ein durch Abtrennen eines Abschnittes von einem Floatglas-Band, insbesondere aus Silikat-Floatglas hergestelltes Substrat verwendet und vorzugsweise auf der dem Floatbad abgewandten Seite des Substrats eine metalloxidhaltige Schicht flammpyrolytisch abgeschieden wird. Geeignet ist dazu unter anderem eine siliziumoxidhaltige Schicht. Anders als etwa in der EP 0594171 vorgeschlagen, werden die Substrate also nach dem Abtrennen und auch nicht nur auf der mit dem Zinnbad in Kontakt gekommenen Seite flammpyrolytisch beschichtet, um so den Produktionsprozess flexibler zu gestalten und die Eigenschaften der Beschichtung zu verbessern.

Insbesondere kann auf der flammpyrolytisch abgeschiedenen Schicht auch eine Schicht mit zumindest einer hydrophoben Komponente aufgebracht werden. Das Aufbringen der flammpyrolytischen Schicht auf der dem Floatbad abgewandten Seite ist günstig, da die auf dem Floatbad aufliegende Seite nachzubearbeitende Spuren durch den Transport und/oder Verunreinigungen durch das Bad aufweisen kann.

Gemäß weiterer Ausführungsformen der Erfindung ist vorgesehen, vor der flammpyrolytischen Beschichtung eine weitere Beschichtung aufzubringen. So kann das Substrat vor dem flammpyrolytischen Beschichten mit der metalloxidhaltigen, vorzugsweise siliziumhaltigen Schicht mit einer weiteren Oxidschicht beschichtet werden. Eine solche Schicht kann beispielsweise unter anderem als infrarotreflektierende Schicht dienen. Besonders geeignet als infrarotreflektierende Schicht ist eine Schicht, die Zinnoxid und/oder Indiumoxid aufweist.

Mögliche Verfahren zum Aufbringen der Oxidschicht sind chemische Dampfphasenabscheidung und/oder Sputtern, beispielsweise bereits am Floatband bei Verwendung von Floatglas oder an einzelnen Glassubstraten. Zur Abscheidung von Zinnoxid ist beispielsweise die Zersetzung von Zinnchlorid, SnCl₄, auf der zu beschichtenden Oberfläche des Substrats geeignet.

Die Erfindung sieht weiterhin vor, dass das Aufbringen einer Schicht mit zumindest einer hydrophoben Komponente das Applizieren einer hydrophob dotierten Sol-Gel-Schicht umfaßt, wobei sich die hydrophobe Komponente an der Oberfläche der Schicht mit dieser Komponente zumindest teilweise absetzt. Sol-Gel-Schichten sind gut geeignet, um fest auf der flammpyrolytischen Beschichtung zu haften. Insbesondere kann dazu eine Siliziumoxid-haltige Sol-Gel-Schicht aufgebracht werden.
Allgemein kann die Schicht mit zumindest einer hydrophoben Komponente, wie beispielsweise eine Sol-Gel-Schicht zumindest eine der Komponenten oder Mischungen der Komponenten Fluoralkylsilan, eine Kohlenwasserstoff-Verbindung mit zumindest einem unpolarem Rest, insbesondere eine unpolare Kohlenwasserstoff-Verbindung, Silikon enthalten.

Gemäß einer Weiterbildung der Erfindung ist weiterhin vorgesehen, dass das Aufbringen der Schicht mit zumindest einer hydrophoben Komponente das Aufbringen eines wie oben erläuterten Doppelschichtsystems mit innerer und äußerer Sol-Gel-Schicht umfaßt. Dementsprechend umfaßt die Schicht mit der zumindest einen hydrophoben Komponente gemäß dieser Ausführungsform eine Doppelbeschichtung, mit einer hydrophoben, eine mit freien OH-Gruppen reagierende Komponente aufweisenden äußeren Schicht und einer inneren anorganischen Sol-Gel-Schicht.

Eine weitere Ausführungsform der Erfindung sieht vor, eine Schicht mit einer photokatalytischen Substanz, wie etwa eine Titanoxid-haltige Schicht aufzubringen. Die photokatalytische Substanz kann beispielsweise in die flammpyrolytische Schicht oder auch in die Sol-Gel-Schicht eingebracht werden. Ebenso ist aber auch denkbar, die photokatalytische Substanz in einer weiteren Schicht einzufügen.

Noch eine Weiterbildung sieht vor, dass eine Interferenzschicht aufgebracht wird, um die optischen Eigenschaften eines erfindungsgemäßen Substrats zu verbessern. Die Interferenzschichten können durch eine gezielte Auswahl von Metalloxiden und deren Brechungsindizes aufgebaut werden. Die Interferenzschicht kann beispielsweise vor oder nach der flammpyrolytischen Schicht auf das Substrat aufgebracht werden. Durch solche Schichtsysteme können unter anderem Ver- oder Entspiegelungen, sowie auch Farbeffekte erzielt werden. Auch derartige Schichten können außerdem mittels Flammpyrolyse abgeschieden werden.

Farbeffekte können alternativ oder zusätzlich durch organische und/oder anorganische Farbstoffe oder Pigmente in einer aufgebrachten Schicht erhalten werden. Pigmente sind zudem in der Lage weitere Funktionalitäten, wie IR-oder UV-Reflektion in die Schicht einzubringen. Alternativ oder auch zusätzlich kann vorteilhaft eine Schicht aufgebracht werden, die Metallpartikel enthält. Eine derartige funktionelle Schicht kann beispielsweise Gold-Partikel enthalten und damit infrarotreflektierend wirken. Die funktionellen Eigenschaften, beziehungsweise die dazu verwendeten Schichtmaterialien können auch in Kombinationen vorliegen.

Gemäß noch einer Ausführungsform der Erfindung kann eine Kratzschutzschicht oder harte, kratzfeste Schicht aufgebracht werden, die beispielsweise harte Metalloxide, wie Aluminiumoxid, Chromoxid, Zirkonoxid und Mischungen daraus enthält. Insbesondere kann eine solche Schicht vorteilhaft Spinelle enthalten, die besonders kratzfeste Schichten ergeben.

Insbesondere in Verbindung mit Sol-Gel-Schichten kann es auch wünschenswert sein, die hydrophobe Komponente vorzukondensieren. Im Falle von Fluoralkylsilan hat sich gezeigt, dass eine Vorkondensation eine mögliche Ursache dafür ist, dass sich das Fluoralkylsilan in der Sol-Gel-Schicht verteilt. Auch kann die hydrophobe Komponente in der Sol-Gel-Schicht Partikel und/oder Mizellen bilden, um ein Entmischen zu verlangsamen.

Andererseits kann es auch gerade wünschenswert sein, dass die hydrophobe Komponente in der Schicht eine Phasenseparation unterläuft. Auf diese Weise kann sich die hydrophobe Komponente an der Oberfläche der Schicht mit dieser Komponente zumindest teilweise absetzen, so dass die hydrophobe Komponente zur Verstärkung des wasser- und insbesondere schmutzabweisenden Effekts an der Oberfläche konzentriert ist.

Noch eine Weiterbildung der Erfindung sieht vor, dass eine Schicht mit einer antibakteriellen Substanz auf das Substrat aufgebracht wird. Beispielsweise kann die antibakterielle Substanz in der Schicht mit der hydrophoben Komponente enthalten sein. Auf diese Weise kann die antibakterielle Substanz besonders gut ihre Wirkung in auf der Oberfläche dieser Schicht anhaftendem/befindlichen Schmutz entfalten. Eine Möglichkeit zur Erzielung einer antibakteriellen Wirkung ist dabei zum Beispiel das Aufbringen eine Silberionen-haltigen Schicht.

Die schmutzabweisende Wirkung kann erfindungsgemäß auch noch durch weitere Maßnahmen unterstützt werden. So ist gemäß einer Weiterbildung der Erfindung vorgesehen, daß eine Beschichtung mit strukturierter Oberfläche zur Erzielung eines Lotuseffekts hergestellt wird. Die Strukturierung kann beispielsweise in Form einer Oberflächenrauhigkeit vorhanden sein. Ebenso kann die Oberfläche auch ein Muster aufweisen. Als geeignete Größe der Strukturen einer derartigen Oberfläche zur Erzielung eines selbstreinigenden Lotuseffekts haben sich Erhebungen oder Vertiefungen mit Höhen im Mikrometerbereich und Abstände zwischen den Erhebungen ebenfalls im Mikrometerbereich, bevorzugt jeweils unter 200 Mikrometern erwiesen. Zur Herstellung derartig strukturierter Beschichtungen ergeben sich verschiedene Möglichkeiten. Beispielsweise kann ein Substrat mit einer bereits entsprechend strukturierten Oberfläche eingesetzt werden. Eine alternative oder zusätzliche Möglichkeit besteht darin, eine Schicht aufzubringen und in die Schicht ein entsprechendes Muster einzuprägen. Unter anderem kann dazu eine Sol-Gel-Schicht, etwa die innere anorganische Sol-Gel-Schicht der oben beschriebenen Doppelschicht verwendet werden. Ebenso besteht aber auch die Möglichkeit, eine zusätzliche Schicht aufzubringen und diese durch Einprägen eines Musters oder in anderer Weise zu strukturieren.

### Ausführungsbeispiele:

### Beispiel 1 a:

Eine SiO₂-Unterschicht auf ein Glassubstrat wird derart hergestellt, dass gewichtsgleiche Mengen an Kieselsäureester und alkoholischem Lösungsmittel kurz zusammen gerührt werden. Anschließend wird 25 Gew.-% Wasser zur Lösung gegeben und zusammen mit geringen Mengen Katalysator (Salzsäure) verrührt und 1 Tag ruhen lassen. Für die Applikation wird das so hergestellte Konzentrat noch einmal mit Alkohol verdünnt, für das Sprühverfahren werden Mischungen von 4 g Konzentrat zu 320 g Alkohol besonders bevorzugt.

### Beispiel 1 b:

Eine Mischoxid-Unterschicht wird derart hergestellt, dass zu dem Konzentrat aus Beispiel 1 a ein Konzentrat aus Titan im Gew.-Verhältnis 1 : 2 gegeben wird. Das Titankonzentrat wird aus TiCl₄ und Ethanol hergestellt, indem eine Lösung aus 128 g/L hergestellt wird. Für den Einsatz von Lösungen, die im Sprühverfahren verarbeitet werden, werden 8 g des SiO₂-Konzentrats und 4 g des Titankonzentrats mit 320 g Alkohol verrührt.

### Beispiel 2 a:

Eine hydrophobe Schicht wird derart hergestellt, dass ein hydrophobes Silan (z.B. Degussa, F8261) und ein Katalysator (Essigsäure) in einem Gew.-Verhältnis von 1 : 70 in Aceton angerührt wird. Diese Lösung wird dann auf eine Unterschicht der Beispiele 1 a und 1 b aufgetragen.

### Beispiel 2 b:

Eine weitere hydrophobe Schicht wird derart hergestellt, dass gewichtsgleiche Mengen an Kieselsäureester und alkoholischem Lösungsmittel kurz zusammen gerührt werden. Anschließend werden 5 Gew.-% hydrophobes Silan (z.B. Degussa, F8800) mit der Lösung verrührt. Anschließend werden 22 Gew.-% eines Gemischs aus Wasser und wenig Katalysator (Salzsäure) langsam eingerührt. Das entstandene Konzentrat ruht dann für 4 h. Eine Sprühlösung wird hergestellt, indem das Konzentrat und Aceton im Gew.-Verhältnis von 1 : 20 gemischt werden. Diese Lösung wird dann auf eine Zwischenschicht der Beispiele 1 aufgetragen.

### Beispiel 3:

Ein weiteres hydrophobes Schichtsystem wird erhalten, indem man eine käuflich zu erwerbende, hydrophobe, mit freien OH-Gruppen reagierende Lösung (z.B. NanoTop^{®}, Fa. Flexotec, oder Easy-to-Clean-Produkte der Fa. Nano-X) auf eine der Unterschichten aus Beispiel 1 appliziert und gemäß dem in Beispiel 4 beschriebenen Verfahren auf ein Glas-Substrat aufträgt.

### Beispiel 4:

Die Unterschicht der Beispiele 1 wird mit einem gängigen Sprühverfahren auf wärmereflektierendes Substratglas aufgetragen. Für eine möglichst gute Verstäubung wird eine Mikro-Sprühdüse (Fa. Krautzberger) eingesetzt. Die Trocknung der Unterschicht erfolgt bei Raumtemperatur.

Die hydrophobe Schicht (Beispiele 2) wird mit einer Mikro-Sprühdüse auf die angetrocknete Unterschicht appliziert. Das komplette System wird dann bei 300° C/20 min derart eingebrannt, dass die organischen Bestandteile nicht zersetzt werden, aber eine sehr gute (Kondensations-) Reaktion zwischen sowie in den Schichten und dem Substrat gewährleistet ist.

### Beispiel 5:

Um die Überlegenheit der nicht ausgebrannten unteren Sol-Gel-Schicht der Beschichtung nach der Erfindung gegenüber einer ausgebrannten Sol-Gel-Schicht nach dem Stand der Technik zu zeigen, wurden zwei entsprechende Proben angefertigt und getestet.

Wie im Beispiel 1 wurde auf zwei gleiche Substrate jeweils eine Si0₂-Schicht durch Sprühen aufgebracht. Eine Probe wurde in einem Ofen bei 500° C 30 Minuten lang erhitzt, wogegen die zweite Probe bei Raumtemperatur unter Raumumgebungsbedingungen gehalten wurde.

Anschließend wurden beide Substrate wie im Beispiel 2 a mit einem Fluorsilan durch Sprühen beschichtet und dann für 20 Minuten bei 300° C hitzebehandelt.

Beide Proben wurden dann durch mechanisches Reiben der beschichteten Oberfläche mit einem nassen Filzkissen unter einer Last von 1 kg getestet. Nach einer vorgegebenen Anzahl von Reibzyklen wurde jeweils der Kontaktwinkel von Wasser an der geriebenen Oberfläche gemessen. Wie aus der nachfolgenden Tabelle zu entnehmen ist, zeigt die Probe nach dem Stand der Technik mit der ausgebrannten Si0₂-Unterschicht eine rapide Abnahme des Kontaktwinkels mit der Zahl der Reibzyklen gegenüber der zweiten erfindungsgemäß beschichteten Probe mit nicht ausgebrannter Si0₂-Unterschicht.

| | Kontaktwinkel von Wasser [°] | |
|---|---|---|
| Zahl der Reibzyklen | Stand der Technik: Si0₂-Schicht ausgebrannt bei 500° C | Erfindung: Si0₂-Schicht nicht ausgebrannt |
| 0 | 103 | 108 |
| 500 | 100 | 105 |
| 1000 | 68 | 96 |
| 1500 | - | 97 |

Die Ergebnisse der Kontaktwinkelmessungen lassen sich mit XPS an den zuvor mechanisch belasteten Stellen bestätigen. So zeigen stöchiometrische Untersuchungen, dass der atomare Fluoranteil im Bereich der Informationstiefe des XPS (2 - 4 nm) bei der Probe mit der ausgebrannten Unterschicht nur ca. halb so hoch ist wie bei der erfindungsgemäß nicht vor der zweiten Beschichtung ausgebrannten Probe.

| XPS-Messung bei 45° | Stand der Technik At% | Erfindung At% |
|---|---|---|
| nach 1000 Zyklen mechanischer Belastung | 10,2 | |
| nach 1500 Zyklen mechanischer Belastung | | 19,9 |

Die Beständigkeit der Schichten ist demnach stark abhängig von der Temperaturbehandlung der Unterschicht. Die erfindungsgemäße Schicht zeigt dabei deutliche Vorteile.

### Beispiel 6:

Zur Untersuchung der optimalen Liegezeit zwischen dem Aufbringen der hydrophoben äußeren Schicht auf die nicht ausgebrannte Unterschicht wurden Proben entsprechend Beispiel 2 a mit unterschiedlichen Liegezeiten hergestellt. Die Liegezeiten betrugen 5 Minuten bis 1 Woche unter normalen Labor-Umgebungsbedingungen. Differenzen hinsichtlich der Abriebbeständigkeit der Doppelschicht, durchgeführt mit vereinfachten Backofen-Reinigungstests konnten praktisch nicht festgestellt werden. Im Hinblick auf die wegen der Wirtschaftlichkeit anzustrebenden kurzen Prozesszeiten sollte daher die Liegezeit generell relativ kurz gehalten werden.

Aber auch aus anderen Gründen sollte die Liegezeit einen gewissen Zeitraum nicht überschreiten. Um diese Grenze festzulegen, wurden die vorgenannten Vergleichsproben (mit unterschiedlichen Liegezeiten) wie im Beispiel 5 jeweils mit einem nassen Filzkissen mechanisch gerieben. Die nachfolgende Tabelle zeigt den Kontaktwinkel vor und nach 500 Reibzyklen von drei Proben mit Liegezeiten von 0,5, 6 oder 24 Stunden vor dem Aufbringen der hydrophoben Schicht. Wie man erkennt, veränderte sich bei der Probe mit der Liegezeit von 0,5 h der Kontaktwinkel praktisch nicht; er bleibt hoch. Für Proben mit einer Liegezeit von länger als 0,5 Stunden fällt der Kontaktwinkel dramatisch ab. Daher werden kurze Liegezeiten bevorzugt, die 6 Stunden nicht überschreiten sollten.

| Liegezeit (in Stunden) | Kontaktwinkel von Wasser vor den Reibzyklen [°] | Kontaktwinkel von Wasser nach 500 Reibzyklen [°] |
|---|---|---|
| 0,5 | 108 | 105 |
| 6 | 108 | 61 |
| 24 | 105 | 59 |

Soweit die Ausführungsbeispiele.

Die Gegenstände, die mit der erfindungsgemäßen Doppelschicht versehen sind, können aus keramischem Material bestehen, wie beispielsweise Fliesen, sanitärkeramische Produkte, oder können Emails, wie z.B. Backofenmuffeln, Metalle, wie z.B. Edelmetalle oder Kunststoffe sein. Eine bevorzugte Anwendung stellen Gegenstände aus Glas oder Glaskeramik dar, wie beispielsweise Backofen-Innenscheiben oder transparente Kamintüren, die jeweils hohen Temperaturen und/oder starken Verschmutzungen ausgesetzt sind und fortwährend gereinigt werden müssen.

Im folgenden wird die Erfindung anhand von weiteren Ausführungsbeispielen und unter Bezugnahme auf die Zeichnungen näher erläutert, wobei gleiche und ähnliche Elemente mit gleichen Bezugszeichen versehen sind und die Merkmale verschiedener Ausführungsbeispiele miteinander kombiniert werden können.

Es zeigen:
Fig. 1 ein Ausführungsbeispiel eines erfindungsgemäß beschichteten Substrats mit infrarotreflektierender Schicht,
Fig. 2A bis 2D Verfahrensschritte gemäß einer Ausführungsform des erfindungsgemäßen Verfahrens,
Fig. 3 ein Ausführungsbeispiel eines erfindungsgemäß herstellbaren Substrats mit Interferenzschicht,
Fig. 4 Diagramme des Kontaktwinkels von Wasser auf einer erfindungsgemäß beschichteten Oberfläche in Abhängigkeit von Abriebhüben,
Fig. 5 ein Ausführungsbeispiel eines erfindungsgemäß beschichteten Substrats mit einer hydrophoben Doppelschicht, und
Fig. 6 ein Ausführungsbeispiel eines erfindungsgemäßen leicht reinigbaren Gegenstands mit einer strukturierten Oberfläche zur Erzielung eines Lotus-Effekts.

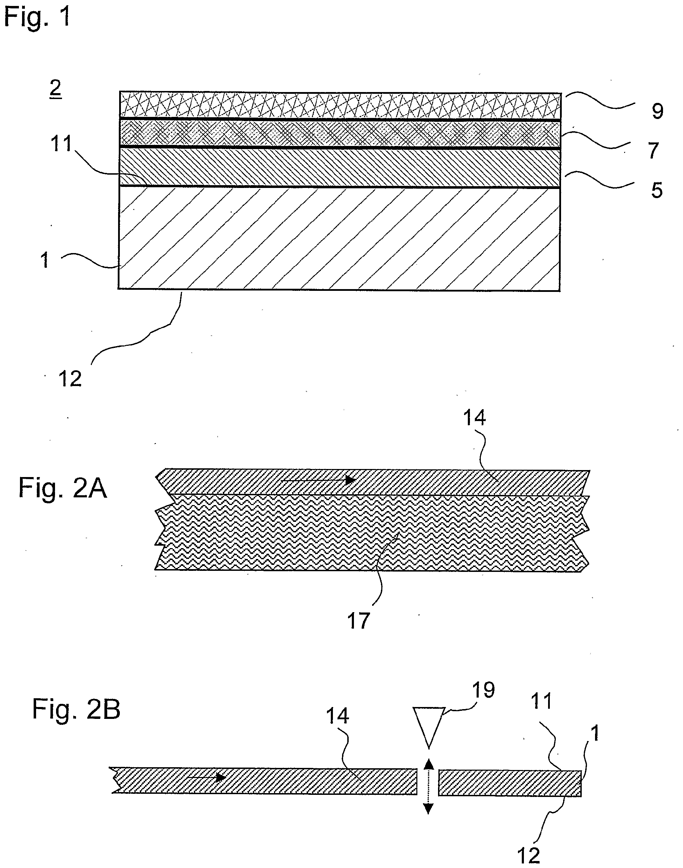

In Fig. 1 ist eine Ausführungsform eines als Ganzes mit dem Bezugszeichen 2 bezeichneten erfindungsgemäß herstellbaren Gegenstandes mit leicht reinigbarer Oberfläche dargestellt. Zur Herstellung des Gegenstandes 2 wird auf einem Substrat 1 des Gegenstands 2 eine metalloxid-, vorzugsweise siliziumhaltige Schicht flammpyrolytisch abgeschieden und auf der flammpyrolytisch abgeschiedenen Schicht eine Schicht mit zumindest einer hydrophoben Komponente aufgebracht.

Bei dem in Fig. 1 gezeigten Ausführungsbeispiel wurde das Substrat 1 mit Seiten 11, 12, auf der Seite 11 im speziellen mit einer zusätzlichen infrarotreflektierenden Zinnoxidschicht 5 beschichtet. Zinnoxid weist zwar hervorragende infrarotreflektierende Eigenschaften auf, allerdings ist die Haftung nachfolgender Beschichtungen, wie insbesondere einer Sol-Gel-Schicht vergleichsweise schlecht. Die Zinnoxidschicht kann beispielsweise auch dotiert sein, um deren Eigenschaften anzupassen oder zu verbessern. Beispielsweise können Substanzen in der Schicht 5 eingebracht werden, welche den Brechungsindex im sichtbaren optischen Bereich anheben oder absenken. Zu diesem Zweck kann unter anderem Titanoxid als Dotierung eingesetzt werden. Eine weitere Möglichkeit ist die Erhöhung der Festigkeit, beispielsweise durch Dotierung mit Aluminiumoxid. Ebenfalls infrarotreflektierende Eigenschaften können mit einer Indiumoxid-Schicht erreicht werden. Ebenso kann anstelle oder zusätzlich zur Zinnoxidschicht 5 auch eine Indium-Zinn-Mischoxidschicht aufgebracht werden.

In einem weiteren Verfahrensschritt erfolgt zur Verbesserung der Hafteigenschaften der Oberfläche die Abscheidung einer vorzugsweise siliziumhaltigen flammpyrolytischen Schicht.

Diese Schicht weist neben Siliziumoxid außerdem noch eine hohe Anzahl von Hydroxylgruppen auf, welche insbesondere auch zur Oberfläche weisen, so dass andere Moleküle gut daran anhaften. Aufgrund dieser Eigenschaften der flammpyrolytischen Schicht 7 ist diese hervorragend als Haftvermittler und/oder zur chemischen Anbindung für die nachfolgend aufgebrachte Schicht 9 geeignet.

Die Schicht 9 dieses Ausführungsbeispiels ist eine Fluoralkylsilan-haltige Sol-Gel-Schicht, wobei das Fluoralkylsilan als hydrophobe Komponente wirkt. Die Schicht 7 dieses Ausführungsbeispiels weist eine Dicke von 1,5 bis 125 Nanometern, bevorzugt im Bereich von 40 bis 850 Nanometern auf. Die Schicht 9 kann beispielsweise durch Aufsprühen, Tauchen oder Roll-Coating appliziert werden. Im allgemeinen kommt es zu einer Phasenseparation nach oder während des Aufbringens des Sol-Gels der Schicht 9, wobei sich das Fluoralkylsilan zumindest teilweise an der Oberfläche absetzt. Werden dickere Schichten eingesetzt, kann es aber auch wünschenswert sein, das Fluoralkylsilan in der Sol-Gel-Schicht 9 zu verteilen. Vorzugsweise ist in solchen Fällen eine homogene Verteilung der hydrophoben Komponente gewünscht, um bei mechanischer Beanspruchung eine länger Lebensdauer dadurch zu erzeugen, dass nach einem teilweise mechanischen Abrieb eine funktionell aktive Oberfläche verbleibt. Dazu kann eine Vorkondensation und eine Mizellbildung des Fluoralkylsilans angestoßen werden, wobei sich die Partikel in der Schicht verteilen und bis zum Aushärten des Sol-Gels nicht mehr absetzen können.

Bevorzugt werden dabei Fluoralkylsilane der oben abgegebenen Formel (1).

Dem Sol-Gel für die Schicht 9 mit Fluoralkylsilan als hydrophobe Komponente kann auch eine Silbersalz zugesetzt werden, so dass die Sol-Gel-Schicht 9 Silberionen aufweist. Diese können zusätzlich zur schmutzabweisenden Eigenschaft auch noch antibakterielle Wirkung entfalten.

Zusätzlich oder alternativ kann auch noch eine photokatalytisch aktive Substanz in der Schicht 9 eingebettet und/oder auf dieser aufgebracht werden. Beispielsweise kann die Schicht 9 dazu Titanoxid aufweisen.

Verfahrensschritte gemäß eines Ausführungsbeispiels zur erfindungsgemäßen Herstellung von Erzeugnissen mit leicht reinigbarer Oberfäche werden nochmals anhand der Fig. 2A bis 2D erläutert.

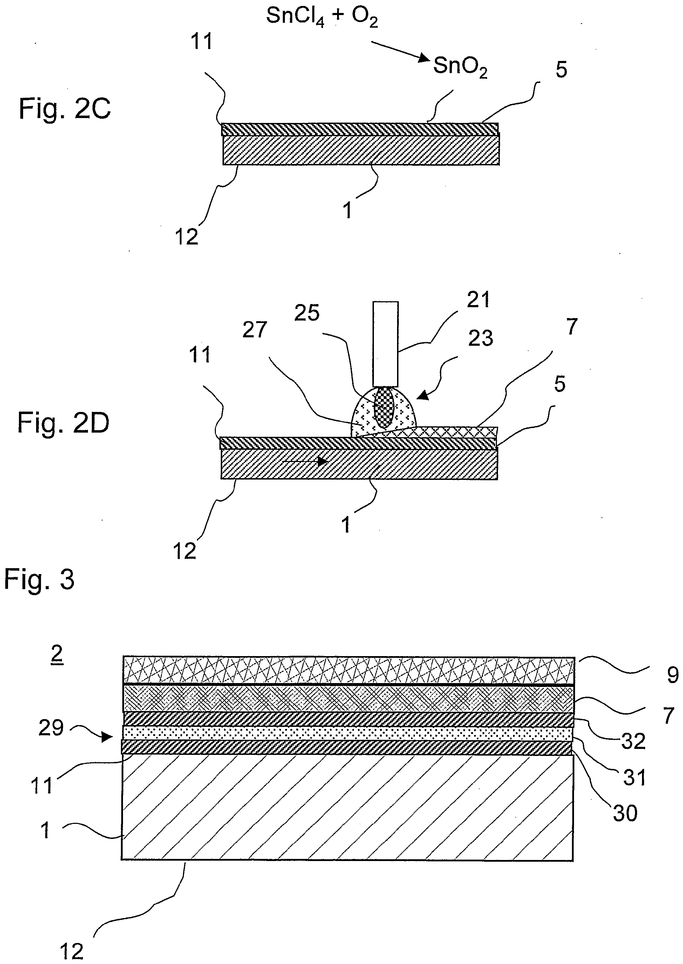

Fig. 2A zeigt eine erste Phase des Herstellungsprozesses, bei welchem ein Silikat-Floatglasband 14 durch Floaten einer Silikatglasschmelze auf einem Zinnbad 17 erzeugt wird. Vom fertigen Floatglasband 14 werden anschließend, wie in Fig. 2B gezeigt, mittels einer Abtrenneinrichtung 19 Substrate 1 durch Abtrennen von Abschnitten hergestellt. Fig. 2C zeigt das Abscheiden der infrarotreflektierenden Zinnoxidschicht 5. Dazu wird das Substrat 1 in erhitztem Zustand mit der Seite 11 einer Zinnchlorid- und Sauerstoffhaltigen Atmosphäre ausgesetzt, wodurch sich auf der Seite 11 Zinnoxid bildet. Die Seite 11 ist bei diesem Ausführungsbeispiel die Seite des Substrats 1, welche nicht mit dem Zinnbad in Berührung war, beziehungsweise die der auf dem Zinnbad aufschwimmenden Seite 12 gegenüberliegende Seite. Alternativ kann auch das Abscheiden der ZinnoxidSchicht flammpyrolytisch erfolgen.

Wie anhand von Fig. 2D gezeigt, wird vorzugsweise eine Siliziumoxid-, beziehungsweise Silikat-haltige Schicht 7 flammpyrolytisch auf dem bereitgestellten Substrat 1 mit der Zinnoxidschicht 5 abgeschieden. Dazu wird die zu beschichtende Seite 11 des Substrats 1 mit der Flamme 23 eines oder mehrerer Brenner 21 beflammt. Die Flamme 23 weist einen inneren, reduzierenden 25 und einen äußeren oxidierenden Teil 27 auf.

Beispielsweise wird dazu ein Silan-haltiges Brenngas mit Propan und/oder Butan als Brennstoff verwendet und die Verbrennung an Luft mit Luftsauerstoff als Oxidationsmittel durchgeführt. Ein geeignetes Silan für die flammpyrolytische Zersetzung und Abscheidung einer Siliziumoxid-haltigen Schicht ist beispielsweise Tetramethoxysilan. Die Flamme 23 wird bevorzugt so entlang der Oberfläche 11 des Substrats geführt, dass möglichst nur der oxidierende Teil 27 5 in Berührung mit der Oberfläche des Substrats 1 gelangt, da insbesondere in diesem Bereich 25 der Flamme 23 eine Hydrolyse des Silans bewirkt wird.

Anstelle oder zusätzlich zu einem Silan kann auch eine andere metallorganische Verbindung zugesetzt werden, beispielsweise Titan, Zirkon, Aluminium und/oder Zinnhaltige metallorganische Verbindungen, um dementsprechend eine Schicht 7 mit Metalloxiden eines oder mehrerer dieser Metalle abzuscheiden.

Für die Flammsilikatisierung, beziehungsweise die flammpyrolytische Abscheidung der vorzugsweise silikathaltigen Schicht 7 werden bevorzugt folgende Parameter verwendet:

| | |
|---|---|
| Abstand der Oberfläche des Substrats zum Brenner: | 5 bis 50 mm, besonders bevorzugt 15 bis 30 mm, |
| Geschwindigkeit der Bewegung der Flamme entlang der Oberfläche: | 1 bis 10 Meter pro Minute, |
| Schichtdicke der flammpyrolytischen Schicht: | 1,5 Nanometer bis 150 Nanometer, besonders bevorzugt |
| Mischungsverhältnis Silan/Luft: | 5 bis 50 Nanometer, 10⁻⁵ bis 10⁻² Mol Silan pro Mol Luft, besonders bevorzugt 2·10⁻⁴ bis 4·10⁻⁴ Mol Silan pro Mol Luft, |
| Mischungsverhältnis Propan/Luft | 1:10 bis 1:20 |
| Verwendetes Silan: | HMDSO (Hexamethyldisiloxan) |

Schließlich kann dann noch eine hydrophob dotierte Sol-Gel-Schicht auf die als Haftverbesserer wirkende flammpyrolytische Schicht 7 wie anhand von Fig. 1 beschrieben wurde, aufgebracht werden, um ein wie in Fig. 1 gezeigtes Erzeugnis 2 mit leicht reinigbarer Oberfläche zu erhalten.

Anstelle der in den Fig. 2A bis 2C gezeigten Schritte, um ein vereinzeltes Substrat 1 mit Zinnoxidschicht 5 für die flammpyrolytische Beschichtung bereitzustellen, können selbstverständlich auch andere Herstellungsverfahren eingesetzt werden. Beispielsweise können Substrate durch Walzen oder Ziehverfahren, wie etwa Down-Draw-Verfahren hergestellt werden.

Fig. 3 zeigt eine weitere Ausführungsform der Erfindung, bei welcher die flammpyrolytische, vorzugsweise silikat-, beziehungsweise siliziumoxidhaltige Schicht 7 auf einer in diesem Ausführungsbeispiel mehrlagigen Interferenzschicht 29 mit Lagen 30, 31, 32 abgeschieden wurde. Die vor der flammpyrolytischen Schicht 7 aufgebrachte Interferenzschicht 29 kann beispielsweise als Entspiegelung für ein leicht reinigbares Erzeugnis mit transparentem Substrat dienen. Je nach Ausbildung der Interferenzschicht kann diese aber auch verspiegelnd und/oder farbgebend wirken.

Alternativ oder zusätzlich zu der in Fig. 3 dargestellten Interferenzschicht können auch andere funktionelle Schichten aufgebracht werden.

So kann anstelle oder zusätzlich zur Interferenzschicht 29 eine Schicht, welche organische und/oder anorganische Farbstoffe oder Pigmente enthält, aufgebracht werden, um den Farbeindruck der Oberfläche zu verändern. Auch kann eine funktionelle Schicht aufgebracht werden, welche Metallpartikel enthält. Diese Metallpartikel, beispielsweise Goldpartikel können bei geeigneter Größenverteilung infrarotreflektierend wirken. Ebenso ist es.auch möglich, eine oder mehrere der Lagen 30, 31, 32 mit weiteren funktionellen Eigenschaften auszustatten. So kann etwa wenigstens eine der Lagen 30, 31, 32 auch als Kratzschutzschicht wirken, oder infrarotreflektierend wirken.

Noch eine Möglichkeit besteht darin, anstelle oder zusätzlich zur Interferenzschicht 29 eine kratzfeste Schicht aufzubringen. Eine derartige Schicht kann insbesondere zumindest eines der Metalloxide Aluminiumoxid, Chromoxid, Zirkonoxid oder Mischungen daraus enthalten, wobei das oder die Metalloxide bevorzugt Spinellstruktur aufweisen.

Alle diese funktionellen Schichten können außerdem auch ebenso wie die Schicht 7 durch Flammpyrolyse geeigneter Metallverbindungen abgeschieden werden.

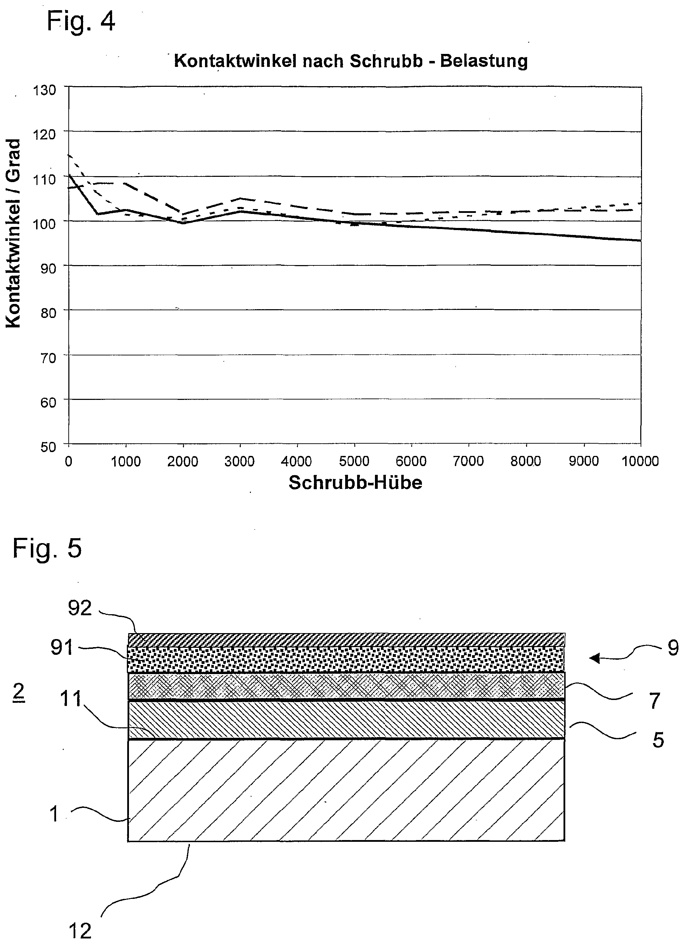

In Fig. 4 ist ein Diagramm mit drei Meßreihen von mechanischen Belastungstests erfindungsgemäß herstellbarer Erzeugnisse mit leicht reinigbarer Oberfläche dargestellt. Als mechanische Belastung wurde ein Schrubb-, beziehungsweise Abriebtest gewählt, bei welchem mit einem wassergetränkten Filztuch über die mit der erfindungsgemäß mit leicht reinigbarer Beschichtung versehene Oberfläche gerieben wurde. Das Filztuch wurde während der Schrubb-Hübe mit einer Gewichtsbelastung von einem Kilogramm auf die Oberfläche des Substrats gepresst.

Die getesteten Substrate sind mit mit vorkondensiertem Fluoralkylsilan dotierten Sol-Gel-Schichten versehen. Das Fluoralkylsilan verteilt sich durch die Vorkondensation innerhalb der hydrophoben Sol-Gel-Schicht. Die Schrubb-Tests an drei Proben zeigen, dass der Kontaktwinkel von Wasser auf der mit der hydrophoben Schicht oder Schicht mit zumindest einer hydrophoben Komponente versehenen Oberfläche des Substrats auch nach 10⁴ Schrubb-Hüben noch mehr als 90° beträgt.

Fig. 5 zeigt eine Variante des in Fig. 1 dargestellten Ausführungsbeispiels. Bei dieser Variante umfaßt die Schicht 9 mit zumindest einer hydrophoben Komponente ein Doppelschichtsystem mit Schichten 91, 92. Dementsprechend umfaßt die Schicht mit der zumindest einen hydrophoben Komponente 9 gemäß diesem Ausführungsbeispiel eine Doppelbeschichtung, mit einer hydrophoben, eine mit freien OH-Gruppen reagierenden Komponente aufweisenden äußeren Schicht 92 und einer inneren Sol-Gel-Schicht 91. Insbesondere kann die Schicht 9 mit den beiden Schichten 91, 92 auch gemäß den oben erläuterten Beispielen 1a - lc, 2a, 2b, 3 bis 6 einschließlich der Unterschicht hergestellt werden.

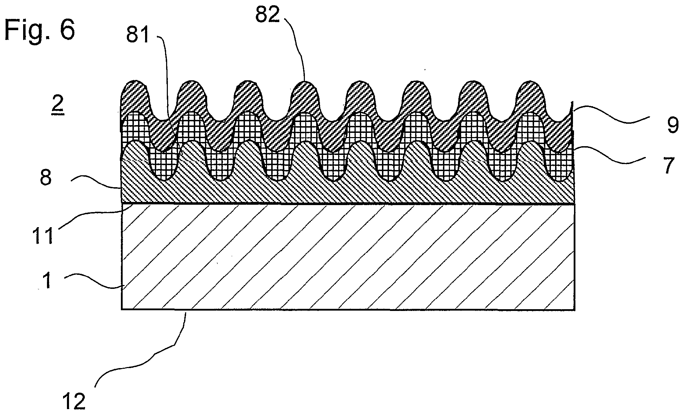

Fig. 6 zeigt ein Ausführungsbeispiel eines erfindungsgemäßen leicht reinigbaren Gegenstands 2 mit einer strukturierten Oberfläche zur Erzielung eines Lotus-Effekts. Auf dem Substrat 1 wurde dazu zunächst eine Zwischenschicht 8 mit Strukturen in Form von Erhebungen 81 aufgebracht. Eine Möglichkeit ist beispielsweise das Aufbringen einer Sol-Gel-Schicht und Einprägen einer strukturierten Oberfläche mit den Erhebungen 81 mittels einer geeignet geformten Matrize. Anschließend werden dann wieder eine metalloxidhaltige, vorzugsweise siliziumoxidhaltige Schicht 7 und darauf eine Sol-Gel-Schicht 9 mit Fluoralkylsilan oder einer anderen hydrophoben Komponente aufgebracht, um einen wie in Fig. 6 dargestellten Gegenstand 2 mit leicht reinigbarer Oberfläche zu erhalten. Die Erhebungen 82 der Oberfläche, die aufgrund der Beschichtung auf der strukturierten Oberfläche der Schicht 8 erhalten werden, haben bevorzugt unabhängig voneinander einen Abstand und eine Höhe im Bereich von 5 bis 200 Mikrometern, um einen Lotuseffekt zu erzielen. Beispielsweise kann auch die innere Sol-Gel-Schicht 91 des in Fig. 5 dargestellten Ausführungsbeispiels entsprechend strukturiert werden, um auch bei diesem Ausführungsbeispiel den Lotuseffekt für eine zusätzliche selbstreinigende Wirkung ausnutzen zu können.

Selbstverständlich können auch andere Methoden eingesetzt werden, um eine entsprechend strukturierte Oberfläche zu erhalten. So kann unter anderem die erfindungsgemäße Beschichtung auf einem bereitgestellten Substrat 1 mit bereits entsprechend zur Erzielung eines Lotuseffekts strukturierter Oberfläche vorgenommen werden.

Die Erfindung läßt sich zur Verbesserung der Eigenschaften einer Vielzahl verschiedener Erzeugnisse einsetzen. Es ist unter anderem daran gedacht, ein erfindungsgemäß herstellbares Erzeugnis, wie es etwa auch in den vorstehend erläuterten Figuren dargestellt ist, als
- eine Backofen- oder Mikrowellen-Sichtscheibe, oder
- eine Innengehäusung eines Backofens oder einer Mikrowelle, oder
- eine Innengehäusung oder Sichtscheibe eines Geschirrspülers, oder
- ein Bestandteil eines Hand-Küchengeräts, oder
- eine Glaskeramik-Platte eines Haushaltsgerätes, oder
- ein Kochgeschirr, oder
- ein beschichtetes Glassschneidebrett, oder
- eine Glasabdeckung für Solarenergieanlagen, oder
- ein Bestandteil eines Kühlschranks oder einer Kühlanlage, beispielsweise eine Sichtscheibe eines transparenten Kühlschranks, oder
- eine Sichtscheibe eines Dampfgarers, oder
- eine Brandschutzscheibe, oder
- ein medizinisches Glas, beispielsweise ein Medikamentenfläschchen, oder
- ein Behältnis oder Rohr für Anwendungen in der Nahrungsmittelerzeugung, beispielsweise ein beschichtetes Rohr für die Milchwirtschaft, oder
- eine Sichtscheibe oder Abdeckung für Displays, oder
- ein Bestandteil von Hifi- oder Rechen- oder Telekommunikationsgeräten, oder
- ein imprägniertes Druckerzeugniss, oder
- ein Desinfektionskabinett, oder zumindest als Bestandteil dieser vorgenannten Erzeugnisse zu verwenden.

Es ist dem Fachmann ersichtlich, dass die Erfindung nicht auf die vorstehend beschriebenen Ausführungsbeispiele beschränkt ist, sondern vielmehr in vielfältiger Weise variiert werden kann. Insbesondere können auch die Merkmale der einzelnen beispielhaften Ausführungsformen miteinander kombiniert werden.

### Bezugszeichenliste

- 1: Substrat
- 2: Gegenstand, Erzeugnis mit leicht reinigbarer Oberfläche
- 5: Zinnoxidschicht
- 7: flammpyrolytische Metalloxid-Schicht
- 8: strukturierte Zwischenschicht
- 9: Fluoralkylsilan-haltige Sol-Gel-Schicht
- 11, 12: Seiten von 1
- 14: Floatglas-Band
- 17: Zinnbad
- 19: Trenneinrichtung
- 21: Brenner
- 23: Flamme
- 25: reduzierender Teil von 23
- 27: oxidierender Teil von 23
- 29: Interferenzschicht
- 30, 31, 32: Lagen von 29
- 81, 82: Erhebung
- 91: innere anorganische Sol-Gel-Schicht von 9,
- 92: hydrophobe, eine mit freien OH-Gruppen reagierende Komponente aufweisende äußere Schicht von 9

## Patentansprüche

1. Verfahren zur Herstellung eines Gegenstandes mit leicht reinigbarer Oberfläche, bei welchem auf einem Substrat des Gegenstands eine metalloxidhaltige, vorzugsweise eine siliziumhaltige Schicht flammpyrolytisch abgeschieden und auf der flammpyrolytisch abgeschiedenen Schicht eine Schicht mit zumindest einer hydrophoben Komponente aufgebracht wird, **dadurch gekennzeichnet, dass** das Aufbringen einer Schicht mit zumindest einer hydrophoben Komponente das Applizieren einer hydrophob dotierten Sol-Gel-Schicht umfaßt, wobei sich die hydrophobe Komponente an der Oberfläche der Schicht mit dieser Komponente zumindest teilweise absetzt.

2. Verfahren gemäß Anspruch 1, **dadurch gekennzeichnet, dass** eine metalloxidhaltige, zur Oberfläche weisende OH-Gruppen enthaltende Schicht flammpyrolytisch aufgebracht wird.

3. Verfahren gemäß Anspruch 1 oder 2, **dadurch gekennzeichnet, dass** die flammpyrolytische Schicht eine poröse, vorzugsweise nanoporöse Oberflächenstruktur aufweist.

4. Verfahren gemäß einem der Ansprüche 1 bis 3, **dadurch gekennzeichnet, dass** das Substrat vor dem flammpyrolytischen Beschichten mit der metalloxidhaltigen Schicht mit einer weiteren Schicht beschichtet wird.

5. Verfahren gemäß Anspruch 4, **dadurch gekennzeichnet, dass** das Substrat vor dem flammpyrolytischen Beschichten mit der metalloxid-haltigen Schicht, vorzugsweise siliziumhaltigen Schicht mit einer Oxidschicht beschichtet wird.

6. Verfahren gemäß Anspruch 5, **dadurch gekennzeichnet, dass** die Oxidschicht mittels chemischer Dampfphasenabscheidung und/oder mittels Sputtern abgeschieden wird.

7. Verfahren gemäß einem der Ansprüche 1 bis 6, **dadurch gekennzeichnet, dass** das Substrat vor dem flammpyrolytischen Beschichten mit der metalloxidhaltigen Schicht mit einer infrarotreflektierenden Schicht versehen wird.

8. Verfahren gemäß Anspruch 7, **dadurch gekennzeichnet, dass** das Substrat mit einer infrarotreflektierenden Schicht versehen wird, die Zinnoxid und/oder Indiumoxid aufweist.

9. Verfahren gemäß einem der Ansprüche 1 bis 8, **dadurch gekennzeichnet, dass** eine metalloxidhaltige, vorzugsweise siliziumoxidhaltige Sol-Gel-Schicht aufgebracht wird.

10. Verfahren gemäß einem der Ansprüche 1 bis 9, **dadurch gekennzeichnet, dass** das Aufbringen einer Schicht mit zumindest einer hydrophoben Komponente das Aufbringen einer Schicht mit zumindest einer der Komponenten oder Mischungen aus den Komponenten
- Fluoralkylsilan,
- eine Kohlenwasserstoff-Verbindung mit zumindest einem unpolaren Rest,
- eine unpolare Kohlenwasserstoff-Verbindung,
- ein Silikon
umfaßt.

11. Verfahren gemäß Anspruch 10, **dadurch gekennzeichnet, daß** die hydrophobe Komponente ein Fluoralkylsilan der allgemeinen Formel
(CFₓH_{Y})-(CFₐH_{b})ₙ-(CF_{a'}H_{b'})ₘ-Si-(OR)₃
umfaßt, wobei x und y unabhängig voneinander 0, 1, 2 oder 3 ist und x + y = 3 ergibt, a, a' und b, b' unabhängig voneinander 0, 1 oder 2 sind und a + b sowie a' + b' = 2 ergibt und n und m unabhängig voneinander ganze Zahlen von 0 bis 20 sind und zusammen maximal 30 ergeben und R ein geradkettiger, verzweigter, gesättigter oder ungesättigter C₁ - bis C₈-Alkylrest ist.

12. Verfahren gemäß einem der Ansprüche 1 bis 11, **dadurch gekennzeichnet, dass** eine Schicht mit einer photokatalytischen Substanz aufgebracht wird.

13. Verfahren gemäß einem der Ansprüche 1 bis 12, **dadurch gekennzeichnet, dass** eine Titanoxid-haltige Schicht aufgebracht wird.

14. Verfahren gemäß einem der Ansprüche 1 bis 13, **dadurch gekennzeichnet, dass** eine Interferenzschicht aufgebracht wird.

15. Verfahren gemäß einem der Ansprüche 1 bis 14, **dadurch gekennzeichnet, dass** ein Kalk-Natron-Glas oder ein Borosilikatglas beschichtet wird.

16. Verfahren gemäß einem der Ansprüche 1 bis 15, **dadurch gekennzeichnet, dass** die hydrophobe Komponente vorkondensiert wird.

17. Verfahren gemäß einem der Ansprüche 1 bis 16, **dadurch gekennzeichnet, dass** die hydrophobe Komponente in der Schicht mit zumindest einer hydrophoben Komponente Partikel und/oder Mizellen bildet.

18. Verfahren gemäß einem der Ansprüche 1 bis 17, **dadurch gekennzeichnet, dass** die hydrophobe Komponente in der Schicht mit der hydrophoben Komponente eine Phasenseparation unterläuft.

19. Verfahren gemäß einem der Ansprüche 1 bis 18, **dadurch gekennzeichnet, dass** das Aufbringen der Schicht mit zumindest einer hydrophoben Komponente das Aufbringen einer Doppelbeschichtung, mit einer hydrophoben, eine mit freien OH-Gruppen reagierenden Komponente aufweisenden äußeren Schicht und einer inneren anorganischen Sol-Gel-Schicht umfaßt.

20. Verfahren gemäß einem der vorstehenden Ansprüche, **dadurch gekennzeichnet, dass** eine Schicht mit einer antibakteriellen Substanz auf das Substrat aufgebracht wird.

21. Verfahren gemäß einem der vorstehenden Ansprüche, **dadurch gekennzeichnet, dass** eine Silberionen-haltige Schicht aufgebracht wird.

22. Verfahren gemäß einem der vorstehenden Ansprüche, **dadurch gekennzeichnet, dass** eine Beschichtung mit strukturierter Oberfläche zur Erzielung eines Lotuseffekts hergestellt wird.

23. Verfahren gemäß Anspruch 22, **dadurch gekennzeichnet, daß** ein Substrat mit strukturierter Oberfläche hergestellt oder verwendet wird.

24. Verfahren gemäß Anspruch 22 oder 23, **dadurch gekennzeichnet, dass** eine Schicht aufgebracht und eine strukturierte Oberfläche durch Einprägen eines Musters in die Schicht erzeugt wird.

25. Verfahren gemäß einem der vorstehenden Ansprüche, **dadurch gekennzeichnet, dass** eine Schicht, welche organische und/oder anorganische Farbstoffe oder Pigmente enthält, aufgebracht wird.

26. Verfahren gemäß einem der vorstehenden Ansprüche, **dadurch gekennzeichnet, daß** eine Schicht aufgebracht wird, welche Metallpartikel enthält.

27. Verfahren gemäß einem der vorstehenden Ansprüche, **dadurch gekennzeichnet, daß** eine kratzfeste Schicht aufgebracht wird, insbesondere eine Schicht, die zumindest eine der Metalloxide Aluminiumoxid, Chromoxid, Zirkonoxid oder Mischungen daraus enthält.

28. Erzeugnis mit leicht reinigbarer Oberfläche, **gekennzeichnet durch** ein Substrat des Gegenstands, auf welchem eine metalloxidhaltige, vorzugsweise eine siliziumhaltige Schicht flammpyrolytisch abgeschieden und auf der flammpyrolytisch abgeschiedenen Schicht eine Schicht mit zumindest einer hydrophoben Komponente aufgebracht ist, **dadurch** gekennzeichnet, dass die Schicht mit zumindest einer hydrophoben Komponente eine hydrophob dotierte Sol-Gel-Schicht ist und die hydrophobe Komponente an der Oberfläche der Schicht mit dieser Komponente zumindest teilweise abgesetzt ist, so dass die hydrophobe Komponente an der Oberfläche konzentriert ist.

29. Erzeugnis gemäß Anspruch 28, wobei das Erzeugnis
- eine Backofen- oder Mikrowellen-Sichtscheibe, oder
- eine Innengehäusung eines Backofens oder einer Mikrowelle, oder
- eine Innengehäusung oder Sichtscheibe eines Geschirrspülers, oder
- ein Bestandteil eines Hand-Küchengeräts, oder
- eine Glaskeramik-Platte eines Haushaltsgerätes, oder
- ein Kochgeschirr, oder
- ein beschichtetes Glassschneidebrett, oder
- eine Glasabdeckung für Solarenergieanlagen, oder
- ein Bestandteil eines Kühlschranks oder einer Kühlanlage, beispielsweise eine Sichtscheibe eines transparenten Kühlschranks, oder
- eine Sichtscheibe eines Dampfgarers, oder
- eine Brandschutzscheibe, oder
- ein medizinisches Glas, beispielsweise ein Medikamentenfläschchen, oder
- ein Behältnis oder Rohr für Anwendungen in der Nahrungsmittelerzeugung, beispielsweise ein beschichtetes Rohr für die Milchwirtschaft, oder
- eine Sichtscheibe oder Abdeckung für Displays, oder
- ein Bestandteil von Hifi- oder Rechen- oder Telekommunikationsgeräten, oder
- ein imprägniertes Druckerzeugniss, oder
- ein Desinfektionskabinett ist.

## Claims

1. A method for producing an object with an easily cleanable surface, wherein a metal oxide containing layer, preferably a silicon containing layer, is deposited flame-pyrolytically on a substrate of the object, and a layer with at least one hydrophobic component is applied onto the flame-pyrolytically deposited layer, **characterised in that**
the application of a layer with at least one hydrophobic component comprises applying a hydrophobically doped sol-gel layer, wherein the hydrophobic component at least partially settles at the surface of the layer with this component.

2. The method according to claim 1, **characterised in that** a metal oxide containing layer is applied flame-pyrolytically, which includes OH groups facing the surface.

3. The method according to any one of claims 1 or 2, **characterised in that** the flame-pyrolytic layer has a porous, preferably nano-porous surface structure.

4. The method according to any one of claims 1 to 3, **characterised in that** prior to being flame-pyrolytically coated with the metal oxide containing layer, the substrate is coated with a further layer.

5. The method according to claim 4, **characterised in that** prior to being flame-pyrolytically coated with the metal oxide containing layer, preferably silicon containing layer, the substrate is coated with an oxide layer.

6. The method according to claim 5, **characterised in that** the oxide layer is deposited by chemical vapour deposition and/or by sputter deposition.

7. The method according to any one of claims 1 to 6, **characterised in that** prior to being flame-pyrolytically coated with the metal oxide containing layer, the substrate is provided with an infrared reflective layer.

8. The method according to claim 7, **characterised in that** the substrate is provided with an infrared reflective layer that comprises tin oxide and/or indium oxide.

9. The method according to any one of claims 1 to 8, **characterised in that** a metal oxide containing, preferably silicon oxide containing sol-gel layer is applied.

10. The method according to any one of claims 1 to 9, **characterised in that** the application of a layer with at least one hydrophobic component comprises applying a layer with at least one of the following components or mixtures of the components:
- fluoroalkyl silane;
- a hydrocarbon compound with at least one non-polar radical;
- a non-polar hydrocarbon compound;
- a silicone.

11. The method according to claim 10, **characterised in that** the hydrophobic component comprises a fluoroalkyl silane of the general formula
(CFₓH_{Y})-(CFₐH_{b})ₙ-(CF_{a'}H_{b'})ₘ-Si-(OR)₃
wherein x and y independently of each other denote 0, 1, 2, or 3, and x + y = 3, a, a' and b, b' independently of each other denote 0, 1, or 2, and a + b as well as a' + b' = 2, and n and m independently of each other denote an integer from 0 to 20 and together amount to a maximum of 30, and R is a straight-chain, branched, saturated or unsaturated C₁- to C₈- alkyl radical.

12. The method according to any one of claims 1 to 11, **characterised in that** a layer with a photocatalytic substance is applied.

13. The method according to any one of claims 1 to 12, **characterised in that** a titanium oxide containing layer is applied.

14. The method according to any one of claims 1 to 13, **characterised in that** an interference layer is applied.

15. The method according to any one of claims 1 to 14, **characterised in that** a lime-soda glass or a borosilicate glass is coated.

16. The method according to any one of claims 1 to 15, **characterised in that** the hydrophobic component is precondensed.

17. The method according to any one of claims 1 to 16, **characterised in that** the hydrophobic component in the layer with at least one hydrophobic component forms particles and/or micelles.

18. The method according to any one of claims 1 to 17, **characterised in that** the hydrophobic component in the layer with the hydrophobic component undergoes a phase separation.

19. The method according to any one of claims 1 to 18, **characterised in that** the application of the layer with at least one hydrophobic component comprises applying a double coating comprising a hydrophobic outer layer including a component that is reactive with free OH groups and an inner inorganic sol-gel layer.

20. The method according to any one of the preceding claims, **characterised in that** a layer with an antibacterial substance is applied to the substrate.

21. The method according to any one of the preceding claims, **characterised in that** a silver ions containing layer is applied.

22. The method according to any one of the preceding claims, **characterised in that** a coating with a textured surface is produced for achieving a lotus effect.

23. The method according to claim 22, **characterised in that** a substrate with a textured surface is produced or employed.

24. The method according to claim 22 or 23, **characterised in that** a layer is applied and a textured surface is produced by embossing a pattern into the layer.

25. The method according to any one of the preceding claims, **characterised in that** a layer is applied which contains organic and/or inorganic dyes or pigments.

26. The method according to any one of the preceding claims, **characterised in that** a layer is applied which contains metal particles.

27. The method according to any one of the preceding claims, **characterised in that** a scratch-resistant layer is applied, in particular a layer which contains at least one of the metal oxides aluminium oxide, chromium oxide, zirconium oxide, or mixtures thereof.

28. An object with an easily cleanable surface, **characterised by** a substrate of the object on which a metal oxide containing layer, preferably a silicon containing layer, is flame-pyrolytically deposited, and a layer with at least one hydrophobic component is applied to the flame-pyrolytically deposited layer, **characterised in that** the layer with at least one hydrophobic component is a hydrophobically doped sol-gel layer and the hydrophobic component is at least partially settled at the surface of the layer with this component, so that the hydrophobic component is concentrated at the surface.

29. The object according to claim 28, wherein the object is
- a viewing pane of a baking oven or of a microwave oven; or
- an inner housing of a baking oven or of a microwave oven; or
- an inner housing or viewing pane of a dishwasher; or
- a component of a hand-held kitchen appliance; or
- a glass ceramic panel of a household appliance; or
- a cooking utensil; or
- a coated glass cutting board; or
- a glass cover for solar energy systems; or
- a component of a refrigerator or of a cooling system, for example a viewing pane of a transparent refrigerator; or
- a sightglass of a steam cooker; or
- a fire protection pane; or
- a medical glass, for example a pharmaceutical vial; or
- a container or tube for applications in food production, for example a coated tube for dairy industry; or
- a viewing pane or cover for displays; or
- a component of hi-fi or computing or telecommunication devices; or
- an impregnated print product; or
- a disinfection cabinet.

## Revendications

1. Procédé de fabrication d'un objet ayant une surface facilement lavable, selon lequel une couche contenant un oxyde métallique, de préférence contenant du silicium, est déposée sur un substrat de l'objet par pyrolyse à la flamme et une couche comprenant au moins un composant hydrophobe est déposée sur la couche déposée par pyrolyse à la flamme, **caractérisé en ce que** le dépôt d'une couche comprenant au moins un composant hydrophobe comprend l'application d'une couche de sol-gel dopée avec un hydrophobe, le composant hydrophobe se déposant au moins partiellement à la surface de la couche comprenant ledit composant.

2. Procédé selon la revendication 1, **caractérisé en ce qu'**une couche contenant un oxyde métallique, renfermant des groupes OH pointant vers la surface, est déposée par pyrolyse à la flamme.

3. Procédé selon la revendication 1 ou 2, **caractérisé en ce que** la couche pyrolysée à la flamme présente une structure superficielle poreuse, de préférence nanoporeuse.

4. Procédé selon l'une des revendications 1 à 3, **caractérisé en ce que** le substrat est revêtu d'une autre couche avant le revêtement par pyrolyse à la flamme avec la couche contenant un oxyde métallique.

5. Procédé selon la revendication 4, **caractérisé en ce que** le substrat est revêtu d'une couche d'oxyde avant le revêtement par pyrolyse à la flamme avec la couche contenant un oxyde métallique, de préférence contenant du silicium.

6. Procédé selon la revendication 5, **caractérisé en ce que** la couche d'oxyde est déposée par dépôt chimique en phase vapeur et/ou par pulvérisation.

7. Procédé selon l'une des revendications 1 à 6, **caractérisé en ce que** le substrat est doté d'une couche réfléchissant l'infrarouge avant le revêtement par pyrolyse à la flamme avec la couche contenant un oxyde métallique.

8. Procédé selon la revendication 7, **caractérisé en ce que** le substrat est doté d'une couche réfléchissant l'infrarouge, qui présente de l'oxyde d'étain et/ou de l'oxyde d'indium.

9. Procédé selon l'une des revendications 1 à 8, **caractérisé en ce qu'**une couche de sol-gel contenant un oxyde métallique, de préférence un oxyde de silicium, est déposée.

10. Procédé selon l'une des revendications 1 à 9, **caractérisé en ce que** le dépôt d'une couche comprenant au moins un composant hydrophobe comprend le dépôt d'une couche ayant au moins l'un des composants ou mélanges de composants
- fluoroalkylsilane,
- un composé hydrocarboné renfermant au moins un résidu non polaire,
- un composé hydrocarboné non polaire,
- une silicone.

11. Procédé selon la revendication 10, **caractérisé en ce que** le composant hydrophobe comprend un fluoroalkylsilane de formule générale
(CFₓH_{y})-(CFₐH_{b})ₙ-(CF_{a'}H_{b'})ₘ-Si-(OR)₃
dans laquelle x et y sont égaux, indépendamment l'un de l'autre, à 0, 1, 2 ou 3, et x + y = 3, a, a' et b, b' sont égaux, indépendamment les uns des autres, à 0, 1 ou 2 et a + b ainsi que a' + b' = 2 et n et m sont, indépendamment l'un de l'autre, des nombres entiers de 0 à 20 et donnent conjointement au maximum 30 et R est un résidu alkyle en C₁ à C₈ linéaire, ramifié, saturé ou insaturé.

12. Procédé selon l'une des revendications 1 à 11, **caractérisé en ce qu'**une couche comprenant une substance photocatalytique est déposée.

13. Procédé selon l'une des revendications 1 à 12, **caractérisé en ce qu'**une couche contenant de l'oxyde de titane est déposée.

14. Procédé selon l'une des revendications 1 à 13, **caractérisé en ce qu'**une couche d'interférence est déposée.

15. Procédé selon l'une des revendications 1 à 14, **caractérisé en ce qu'**un verre sodocalcique ou un verre borosilicaté est revêtu.

16. Procédé selon l'une des revendications 1 à 15, **caractérisé en ce que** le composant hydrophobe est précondensé.

17. Procédé selon l'une des revendications 1 à 16, **caractérisé en ce que** le composant hydrophobe forme des particules et/ou des micelles dans la couche comprenant au moins un composant hydrophobe.

18. Procédé selon l'une des revendications 1 à 17, **caractérisé en ce que** le composant hydrophobe subit une séparation de phase dans la couche comprenant le composant hydrophobe.

19. Procédé selon l'une des revendications 1 à 18, **caractérisé en ce que** le dépôt de la couche comprenant au moins un composant hydrophobe comprend le dépôt d'un double revêtement, comprenant une couche extérieure présentant un composant réagissant avec des groupes OH libres et une couche de sol-gel inorganique intérieure.

20. Procédé selon l'une des revendications précédentes, **caractérisé en ce qu'**une couche comprenant une substance antibactérienne est déposée sur le substrat.

21. Procédé selon l'une des revendications précédentes, **caractérisé en ce qu'**une couche comprenant des ions argent est déposée.

22. Procédé selon l'une des revendications précédentes, **caractérisé en ce qu'**un revêtement ayant une surface structurée pour l'obtention d'un effet de lotus est fabriqué.

23. Procédé selon la revendication 22, **caractérisé en ce qu'**un substrat ayant une surface structurée est fabriqué ou utilisé.

24. Procédé selon la revendication 22 ou 23, **caractérisé en ce qu'**une couche est déposée et une surface structurée est produite par impression d'un modèle dans la couche.

25. Procédé selon l'une des revendications précédentes, **caractérisé en ce qu'**une couche qui renferme des colorants ou des pigments organiques et/ou inorganiques est déposée.

26. Procédé selon l'une des revendications précédentes, **caractérisé en ce qu'**une couche qui contient des particules métalliques est déposée.

27. Procédé selon l'une des revendications précédentes, **caractérisé en ce qu'**une couche résistant aux rayures est déposée, en particulier une couche qui contient au moins un des oxydes métalliques oxyde d'aluminium, oxyde de chrome, oxyde de zirconium ou leurs mélanges.

28. Produit comprenant une surface facilement lavable, **caractérisé par** un substrat de l'objet, sur lequel sont déposées par pyrolyse à la flamme une couche contenant un oxyde métallique, de préférence contenant du silicium, et, sur la couche déposée par pyrolyse à la flamme, une couche comprenant au moins un composant hydrophobe, **caractérisé en ce que** la couche comprenant au moins un composant hydrophobe est une couche de sol-gel dopée avec un hydrophobe et le composant hydrophobe est déposé au moins partiellement sur la surface de la couche comprenant ledit composant afin que le composant hydrophobe se concentre à la surface.

29. Produit selon la revendication 28, qui est :
- une vitre de four traditionnel ou de four à micro-ondes, ou
- un boîtier interne d'un four traditionnel ou four à micro-ondes, ou
- un boîtier interne ou une vitre d'un lave-vaisselle, ou
- un composant d'un ustensile de cuisine, ou
- une plaque vitrocéramique d'un appareil ménager, ou
- un récipient de cuisson, ou
- une planche à découper en verre revêtue, ou
- un recouvrement en verre pour des installations à énergie solaire, ou
- un composant d'un réfrigérateur ou d'une installation de refroidissement, par exemple une vitre d'un réfrigérateur transparent, ou
- une vitre d'un cuiseur vapeur, ou
- une vitre anti-incendie, ou
- un verre médical, par exemple un flacon pour médicaments, ou
- un récipient ou un tube pour des applications dans la fabrication de produits alimentaires, par exemple un tube revêtu pour la laiterie, ou
- une vitre ou un recouvrement pour écrans, ou
- un composant d'une chaîne Hifi ou d'une calculette ou d'un appareil de télécommunication, ou
- un produit d'impression imprégné, ou
- une cabine de désinfection.
